# EUROPÄISCHE PATENTSCHRIFT

(11) **EP 0 889 289 B1**
(45) Veröffentlichungstag und Bekanntmachung des Hinweises auf die Patenterteilung: **01.10.2003**
(21) Anmeldenummer: 98810406.3
(22) Anmeldetag: 06.05.1998
(51) Int. Cl.: F23R 3/00, F23R 3/40, F02C 7/08

(54) **Gasturbinenanalge und Verfahren zu deren Betrieb**
Gas turbine system and method of operation thereof
Système de turbine à gaz et méthode d'exploitation

(30) Priorität: 30.06.1997 DE 19727730
(43) Veröffentlichungstag der Anmeldung: 07.01.1999
(73) Patentinhaber: ALSTOM (Switzerland) Ltd, 5401 Baden (CH)
(72) Erfinder: Sattelmayer, Thomas, Prof. Dr., 85435 Erding (DE)

(56) Entgegenhaltungen:
- DE-B- 1 077 821
- US-A- 3 563 031
- US-A- 3 797 231
- US-A- 4 062 190
- US-A- 4 754 607
- US-A- 5 518 697
- PATENT ABSTRACTS OF JAPAN vol. 009, no. 117 (M-381), 22. Mai 1985 (1985-05-22) -& JP 60 003422 A (HITACHI SEISAKUSHO KK), 9. Januar 1985 (1985-01-09)

## Beschreibung

### Technisches Gebiet

Die Erfindung bezieht sich auf eine Gasturbinenanlage gemäss dem Oberbegriff, des Anspruchs 1 sowie auf ein Verfahren zum Betreiben einer Gasturbinenanlage gemäss Anspruch 9.

### Stand der Technik

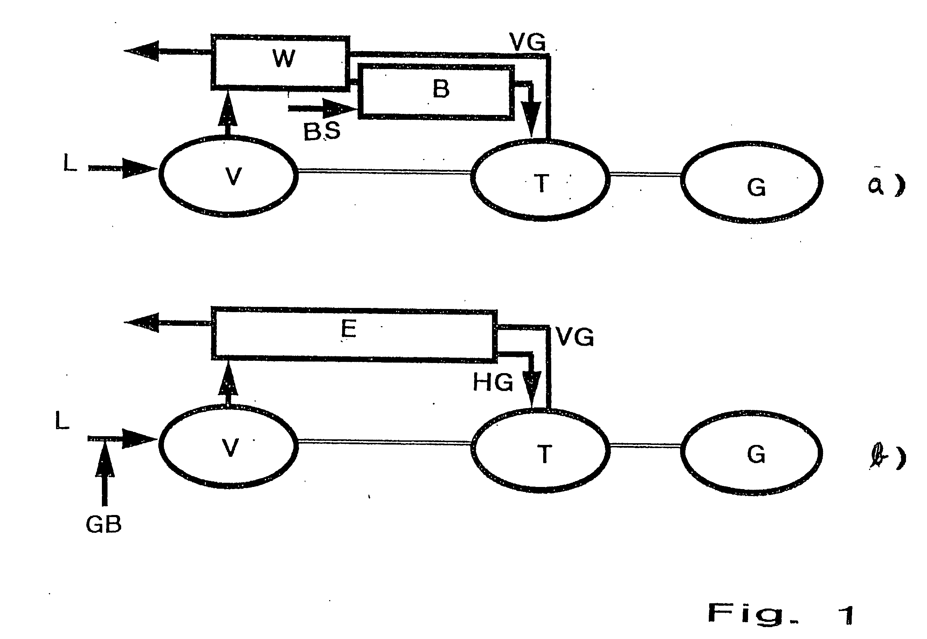

Die zu den Wärmekraftmaschinen zählenden Gasturbinen werden mit den Verbrennungsgasen flüssiger Treibstoffe betrieben. Ein typischer Gasturbinenaufbau, der in Figur 1a dargestellt ist, weist einen Verdichter V auf, auch Turbokompressor genannt, der Luft L ansaugt, die typischerweise auf einen Druck von 4 bis 6 bar verdichtet und in einen Wärmetauscher W geleitet wird, in dem sie durch noch heiße, der Turbine T entströmenden Verbrennungsgase VG vorgewärmt wird. Schließlich gelangt die vorgewärmte und komprimierte Zuluft gemeinsam mit Brennstoffen BS in die Brennkammer, wobei Heiß- bzw. Verbrennungsgase von wenigstens 600°C entstehen. Diese Verbrennungsgase strömen mit großer Geschwindigkeit in die Turbine T und treiben diese an, die für gewöhnlich mit einem Generator G zur Stromerzeugung verbunden ist.

Der Wirkungsgrad einer Gasturbine ist umso größer, je höher die Temperatur der in die Turbinenschaufel eintretenden Verbrennungsgase und je niedriger die Temperatur der aus der Gasturbine ins Freie tretenden Abgase ist. Daher werden fast immer die aus den Turbinenschaufeln austretenden und noch heißen Verbrennungsgase durch den Wärmetauscher geleitet, wo sie ihre Abwärme weitgehend an die vom Verdichter gelieferte Frischluft vor deren Eintritt in die Brennkammer abgeben können.

Ein weiterer Vorteil von Wärmetauschern, die auch als Rekuperatoren bekannt sind, besteht darin, daß ihr thermodynamisches Optimum bei relativ geringen Druckverhältnissen erreichbar ist, wodurch der Turbinenaufbau mit nur wenigen Turbinenstufen auskommt, so daß der Gesamtaufbau einer Gasturbinenanordnung relativ einfach ausgebildet werden kann.

Problematisch ist jedoch der Betrieb von Wärmetauschern bei Vollast, da durch die sehr hohen, in der Brennkammer entstehenden Temperaturen, sehr heiße Verbrennungsgase gebildet werden, die innerhalb des Wärmetauschers zu einer sehr hohen Luftvorwärmung führt, wodurch jedoch ein sicherer Betrieb mit schadstoffarmen Vormisch-Verbrennungsverfahren schwierig wird.

Es hat sich gezeigt, daß ein wesentlicher Bestandteil zur Optimierung von Gasturbinenanordnungen der Wärmetauscher bzw. Rekuperator ist, der wesentlich zum Wirkungsgrad derartigen Maschine beiträgt.

Im Gegensatz zur klassischen Bauart eines sogenannten Rohrbündelwärmetauschers, der jedoch nur über eine geringe Leistungsdichte verfügt, bestehen moderne, kompakte Wärmetauscher meist aus einem Stapel geeignet geformter Bleche, die schichtförmig übereinander angeordnet sind und auf diese Weise Durchströmungskanäle bilden, durch die wechselweise die vorverdichtete Zuluft sowie in entgegengesetzter Richtung zur Strömungsrichtung der Zuluft, die heißen Verbrennungsgase strömen.

Da die spezifische Leistung eines plattenförmig ausgebildeten Wärmetauschers in erster Linie von der charakteristischen Länge des Wärmeübertragerelementes abhängt, werden heutzutage Plattenwärmetauscher mit sehr feinen Kanälen bei hoher Übertragungsleistung hergestellt.

Die Schrift US-A-3,797,231 offenbart eine Brennkraftmaschine mit kontinuierlichem Verbrennungsverfahren, mit Einrichtungen zur Erzeugung eines primären Stroms verdichteter, verhältnismässig kalter Luft, dem über Einrichtungen Wärme und Treibstoff zur Erzeugung einer kontinuierlichen, katalytischen Verbrennung zugeführt wird. Die heissen Verbrennungsgase treiben ein Arbeitselement an.

### Darstellung der Erfindung

Aufgabe der Erfindung ist es, gattungsgemäße Gasturbinenanlagen in ihrem Leistungsspektrum weiter zu optimieren und insbesondere deren Aufbau zu vereinfachen. Der Betrieb aller Komponenten und insbesondere der Einsatz von Wärmetauschern soll auch bei hohen Verbrennungsgastemperaturen sicher gewährleistet sein, wobei ein besonderes Augenmerk auf die Einhaltung entsprechender Abgasnormen zu legen ist.

Die Lösung der der Erfindung zugrundeliegenden Aufgabe ist in Anspruch 1 angegeben. Ein erfindungsgemäßes Verfahren zum Betrieb des in Anspruch 1 angegebenen Gasturbinenanlage ist Gegenstand des Anspruchs 9. Den Erfindungsgedanken vorteilhaft weiterbildende Merkmale sind Gegenstand der Unteransprüche.

Erfindungsgemäß ist eine Gasturbinenanlage gemäss dem Oberbegriff des Anspruchs 1 derart weitergebildet, daß Mittel zur Erreichung eines Wärmeübergangs von dem entzündeten Luftbrennstoffgemisches innerhalb des Zuleitenden Kanals hin zu den, den zuleitenden Kanal umströmenden Verbrennungsgasen vorhanden sind. Wie im weiteren noch auszuführen ist, tragen die heißen Verbrennungsgase neben der Heizwirkung über den Bereich der Zündtemperatur des Luft-Brennstoffgemisches auch zur Kühlung der erfindungsgemäßen Wärmetauscher-Brennstoffkammer-Kombination bei, um auf diese Weise ein unkontrolliertes Erhitzen der Einheit zu vermeiden.

Im Gegensatz zu konventionellen Gasturbinenanordnungen, bei denen, wie vorstehend beschrieben, Wärmetauscher und Brennkammer zwei getrennte Einheiten bilden, die entsprechend über Zu- bzw. Abführleitungen miteinander verbunden sind, liegt dem Erfindungsgedanken die Kombination aus Wärmetauscher und Brennkammer zugrunde. Zu diesem Zweck wird vorzugsweise ein an sich bekannter Plattenwärmetauscher derart modifiziert, indem üblicherweise die komprimierte Zuluft durchströmenden Kanäle innenseitig mit einer Katalysatorschicht umgeben bzw. beschichtet ist. Als aktives Material für den Katalysator wird üblicherweise Platin verwendet.

Der auf diese Weise modifizierte Plattenwärmetauscher sieht eine Vielzahl stapelförmig übereinander angeordnete Durchführungskanäle auf, die abwechselnd aus innenseitig mit Katalysatormaterial beschichteten Kanälen und unbeschichteten durch Wärmetauscherwänden eingeschlossene Kanäle zusammengesetzt sind.

Zur weiteren Vereinfachung ist der zumeist gasförmige Brennstoff vor der Verdichtereinheit der Zuluft homogen beizumischen, wodurch der übliche Gaskompressor zur Komprimierung und Einspritzung des Brennstoffes in die Brennkammer entfallen kann.

Die im Verdichter erreichbaren Druckverhältnisse sind derart gering einzustellen, so daß die im Verdichter erreichbaren Temperaturen ein Auftreten von Selbstzündungen ausschließen.

Selbstverständlich ist alternativ zu der vorstehend beschriebenen Beimischung des Brennstoffes zur Zugeführten Lutf auch die an sich bekannte Eindüsung des Brennstoffes nach dem Verdichter in die komprimierte Luft möglich.

Das auf diese Weise erhaltbare Luft-Brennstoffgemisch wird erfindungsgemäß in die mit Katalysatormaterial ausgekleideten zuleitenden Kanäle der erfindungsgemäßen Kombinationseinheit geleitet, in denen sie durch thermische Kopplung an die, die Einheit entgegengesetzt durchströmenden heißen Verbrennungsgase, erwärmt werden. Die Erwärmung durch die heißen Verbrennungsgase führt aufgrund ihrer sehr hohen Eigentemperatur im Laufe des Kanals zur Überschreitung der Zündtemperatur des Luft-Brennstoffgemisches, wodurch innerhalb des Kanals ein entzündetes Heißgas gebildet wird, das unmittelbar in die Turbine weitergeleitet wird.

Erfindungsgemäß ist erkannt worden, daß zur Verbrennung der für den Betrieb einer Turbine erforderlichen Heißgase die Abwärme der während der Verbrennung entstehenden Abgase unter Verwendung eines geeigneten Katalysators ausreicht, um das Luft-Brennstoffgemisch zu entzünden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen beschrieben. Es zeigen:
- Fig. 1a: Prinzipskizze einer Gasturbinenanordnung gemäß dem Stand der Technik,
- Fig. 1b: Prinzipskizze einer erfindungsgemäßen Gasturbinenanordnung,
- Fig. 2: schematischer Aufbau eines Ausführungsbeispiels der erfindungsgemäßen Kombination aus Wärmetauscher und Brennkammer,
- Fig. 3: Diagrammdarstellung eines typischen Temperaturverlaufes innerhalb der erfindungsgemäßen Kombination aus Wärmetauscher und Brennkammer für den Grenzfall schneller Wärmefreisetzung sowie
- Fig. 4: Diagrammdarstellung eines typischen Temperaturverlaufes innerhalb der erfindungsgemäßen Kombination aus Wärmetauscher und Brennkammer bei langsamer katalytischer Wärmeumsetzung.

### Wege zur Ausführung der Erfindung, gewerbliche Verwendbarkeit

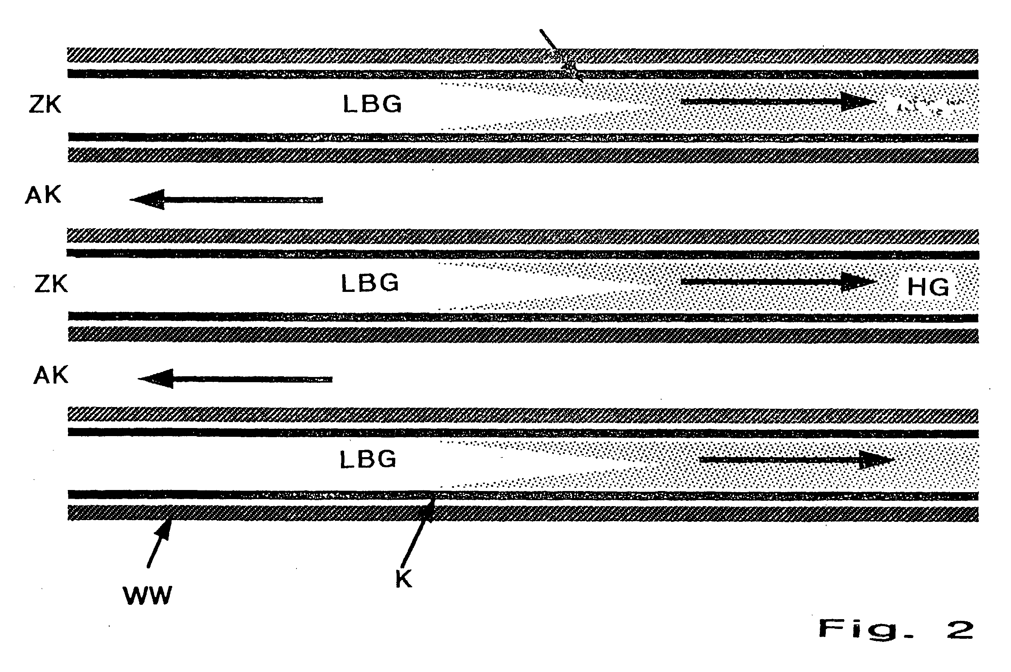

In Fig. 1a ist zum Stand der Technik der übliche Aufbau einer Gasturbinenanordnung angegeben, wie sie im Eingang der Beschreibung umrissen ist. Wesentlich hierbei ist, daß der Wärmetauscher W und die Brennkammer B als zwei getrennte Einheiten ausgebildet sind, die im Falle der erfindungsgemäßen Anordnung gemäß Fig. 1b als gemeinsame Einheit E ausgebildet sind. Die engeführte Luft L und der gasförmige Brennstoff GB werden vor dem Verdichter V miteinander vermengt und im Verdichter V entsprechend verdichtet. Das verdichtete Luft-Brennstoffgemisch LBG gelangt nun erfindungsgemäß direkt in die erfindungsgemäße Einheit E, die wie in Fig. 2 dargestellt, mit einem Katalysatormaterial beschichtete Zuleitungskanäle aufweist, in denen das Luft-Brennstoffgemisch LBG erwärmt und zur Zündung gebracht wird. Die dabei entstehenden Heißgase HG gelangen zum Antrieb in die Turbine T, die in an sich bekannter Weise mit einem Generator G verbunden ist. Die heißen aus der Turbine T austretenden Verbrennungsgase VG werden zur Erhitzung des in die erfindungsgemäße Einheit E eingeleiteten Luft-Brennstoffgemisches LBG genükt.

In Fig. 2 ist ein typischer Querschnitt durch die erfindungsgemäße Einheit E bestehend aus der Kombination aus einem Wärmetauscher W und einer Brennkammer B dargestellt. Die das Luft-Brennstoffgemisch LBG zuleitenden Kanäle ZK sind jeweils von Wärmetauscherwänden WW mit geeignet ausgewählten thermischen Kopplungseigenschaften umgeben, die innenseitig mit einem Katalysator K beschichtet sind. Als aktives Material für den Katalysator wird üblicheweise Platin verwendet. Zwischen den zuleitenden Kanälen ZK sieht die plattenförmige Stapelanordnung Abgasrückführkanäle AK vor, die jeweils unmittelbar von den Wärmetauscherwänden WW umgeben sind. Auf diese weise sind die zuleitenden Kanäle ZK und die Abgasrückführkanäle AK schichtförmig in der Art eines Plattenwärmetauschersangeordnet. Auf diese Weise erfolgt ein unmittelbarer Wärmeübertrag von den heißen, in die Abgasrückführkanäle AK rückgeführten Verbrennungsgase VG über die Wärmetauscherwand WW auf die Katalysatorschicht, die die Wärme unmittelbar an das verdichtete Luft-Brennstoffgemisch LBG weitergibt.

Im Falle der in Fig. 2 dargestellten Anordnung durchströmt das verdichtete Luft-Brennstoffgemisch LBG von links nach rechts die zuleitenden Kanäle ZK, wohingegen die Verbrennungsgase VG die Abgasrückführkanäle AK von rechts nach links durchlaufen. Infolge des unmittelbaren Wärmeüberganges werden die Bereiche der zuleitenden Kanäle ZK, die der Zuleitungsseite der Verbrennungsgase VG am nächsten liegen (hier die rechte Seite der Darstellung) am meisten erwärmt. Infolge des sich entlang der Zuleitungskanäle ZK ausbildenden Temperaturgradienten wird in dem Bereich des zuleitenden Kanals ZK das Luft-Brennstoffgemisch LBG entzündet, an der dien Katalysator K die Zündtemperatur des brennbaren Gemisches überschreitet, Heißgase HG entstehen, die unmittelbar der Turbine zugeleitet werden. Typische Zündtemperaturen liegen im Bereich oberhalb von 500°C.

Die erfindungsgemäße Kombination von Wärmetauscher W und katalytisch gezündeter und unterstützter Brennstoffumsetzung vermeidet insbesondere die zwei größten Nachteile bei an sich bekannten katalytischen Brennern.

Zum einen wird die zur Aktivierung des Katalysators K notwendige Mindesttemperatur von ca. 500°C durch die Wärmeübertragung aufgrund konvektiver Luftvorwärmung über die Wärmetauscherwände WW automatisch erreicht. Bei möglichen Laständerungen der Turbine, die zu Schwankungen in der Temperatur der Verbrennungsgase VG führen kann, verschiebt sich die Zone, in der das Luft-Brennstoffgemisch LBG entzündet wird, längs der zuleitenden Kanäle ZKₒ (D) das sichere katalytische iniziierte Zünden wird jedoch solange nicht gefährdet, solange das Ende, d.h. die Eintrittsöffnung des zuleitenden Kanales ZK von der Zündtemperatur nicht erreicht wird.

Es hat sich gezeigt, daß unter der Annahme sinnvoller Parameter für den Betrieb von Gasturbinen die Zündtemperatur nur im mittleren und oberen Lastbereich einer Gasturbine erreicht wird. Da Kraft-Wärme-Kopplungsanlagen auf Gasturbinenbasis aus Wirkungsgradgründen ohnehin nur bei hoher Last betrieben werden, stellt die Grenze des Funktionsprinzips keine relevante Einschränkung dar. Das Anfahren der Gasturbinenanordnung mit der erfindungsgemäßen Kombination aus Wärmetauscher W und Brennkammer B kann beispielsweise unter Zuhilfenahme eines Hilfsbrenners durchgeführt werden, der den Auslaßbereich der zuleitenden Kanäle ZK derart erwärmt, daß in diesem Bereich die Zündtemperatur erreicht wird.

Das zweite Problem der vorstehend angesprochenen Probleme bei der klassischen katalytischen Verbrennung ist die schnelle Zerstörung des Katalysators K sowie dessen Trägers bei Temperaturen über 800°C.

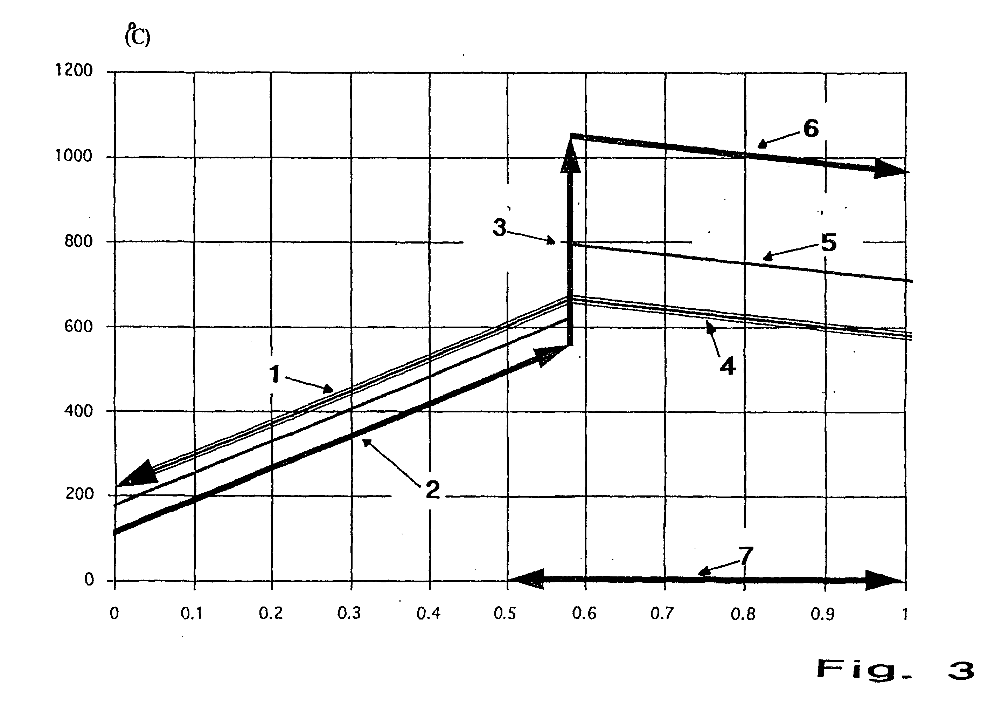

Grundsätzlich erfordern Temperaturen um 950°C oder darüberhinaus, wie sie für thermodynamische Wirkungsgrade um 40% notwendig sind, eine im Hinblick auf die Komplexität und die NO-Emission sehr aufwendige und dadurch nachteilige Nachverbrennungsstufe. Die Kombination von Wärmeübertragung und Verbrennung innerhalb einer Einheit E führt ganz automatisch auch zu einer Kühlung des Katalysators K, sobald die Temperatur des Verbrennungsprozesses über die der von der Turbine herkommenden Verbrennungsgase VG steigt. So ist durch geeignete Wahl der thermischen Wärmeübergänge an den Wärmetauscherwänden WW die Wandtemperatur auf etwa 800°C zu begrenzen. Dieser Sachverhalt wird unter Bezugnahme auf die Fig. 3 im einzelnen dargestellt.

Die Abszisse des Diagramms gibt die Länge des zuleitenden Kanals ZK an. An der Ordinate sind die in dem zuleitenden Kanal ZK auftretenden Temperaturen in °C angegeben. Die dick eingetragenen Pfeile geben den Temperaturverlauf des Luft-Brennstoffgemisches LBG an. Die etwas dünner durchgezogene schwarze Linie gibt das Temperaturverhalten der Wandtemperatur des Wärmetauschers W. Der dreifach strichlierte Pfeil-Zug entspricht dem Temperaturverhalten der von der Turbine T kommenden Verbrennungsgase VG. Der in Fig. 3 angenommene Temperaturverlauf geht von der Annahme aus, daß die Wärmefreisetzung des durch die Verbrennung des Luft-Brennstoffgemisches entstehende Heißgas unendlich schnell erfolgt.

Ferner ist in Fig. 3 auf der Abszisse zwischen den Werten 0,5 und 1 der Bereich der zuleitenden Kanäle angegeben, der innenseitig mit katalytischem Material beschichtet ist. Durch die Erwärmung der heißen, von der Turbine T kommenden Verbrennungsgase VG wird die Zündtemperatur zwischen 0,5 und 0,6 der Länge der zuleitenden Kanäle ZK erreicht, wodurch die Temperatur innerhalb der zuleitenden Kanäle ZK sprunghaft ansteigt. Es wird deutlich, daß bei hohen Feuertemperaturen zunächst bis zur Zündung Wärme von den Verbrennungsgasen VG an das Luft-Brennstoffgemisch LBG übertragen wird. Nach der Wärmefreisetzung durch die Zündung des Luft-Brennstoffgemisches ergibt sich eine Wärmefluß auf die von der Turbine kommenden Verbrennungsgase, wodurch die Vorwärmleistung der Verbrennungsgase verbessert wird. Die Spitzentemperatur der nach der Zündung innerhalb der zuleitenden Kanäle entstehenden Heißgase ist dabei höher als die Turbineneintrittstemperatur, wodurch die CO-Oxidation verbessert wird. Die Grenze zur NO-Bildung, die bei Temperaturen von über 1300°C erreicht wird, wird jedoch mit der erfindungsgemäßen Vorrichtung nicht erreicht.

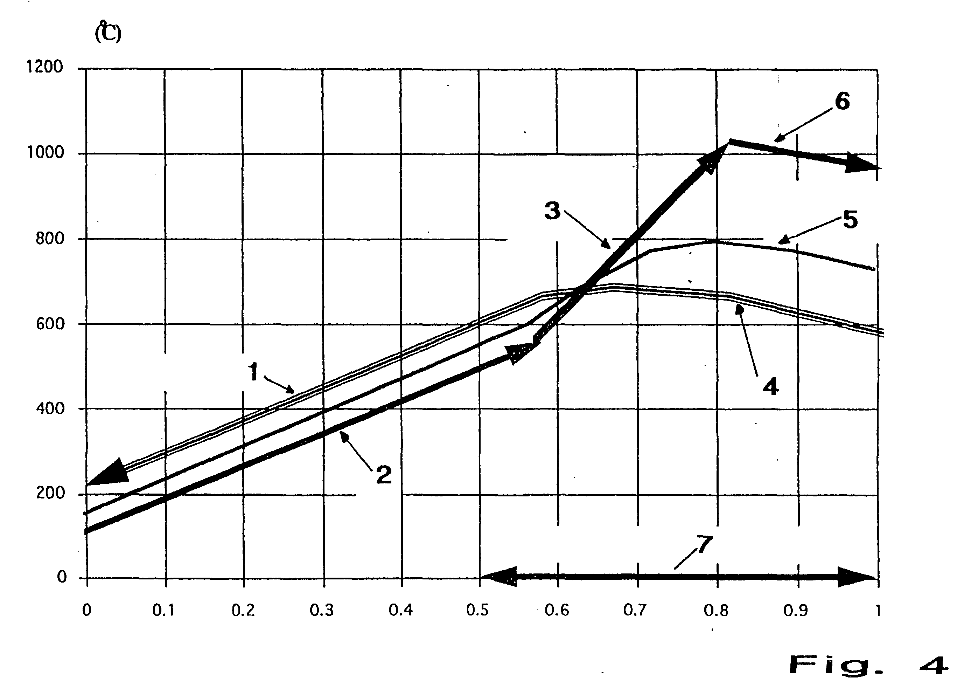

Der Zünd- und Verbrennungsvorgang ist wie vorstehend bereits erwähnt, in Fig. 3 als unendlich schnell angenommen. Ist jedoch das Luft-Brennstoffgemisch zu mager für eine hohe Umsetzung in der Gasphase nach katalytischer Zündung, so findet die Zündreaktion über den zuleitenden Kanal in Richtung der Turbinenseite verteilt statt. Dieser Fall ist schematisch in Fig. 4 dargestellt, die im übrigen die gleiche Diagrammzuordnung, wie in Fig. 3 beschrieben ist, zeigt. Durch die Wahl des Mischungsverhältnisses des Luft-Brennstoffgemisches LBG kann des räumliche Zündbereich innerhalb des zuleitenden Kanals ZK festgelegt werden.

Eine besonders vorteilhafte Eigenschaft der erfindungsgemäßen katalytischen Kombination aus Wärmetauscher und Brennkammer ist die Fähigkeit, im Gegensatz zur homogenen Gasphasenverbrennung auch noch sehr magere Gemische zünden und umsetzen zu können. Im Betriebsbereich kann daher ohne komplexe Stufungseinrichtungen, wie sie von mageren Vormischtechniken bekannt sind, die Erzeugung von NO fast völlig verhindert bzw. vermieden werden.

### BEZUGSZEICHENLISTE

- AK: Abgasrückführkanal
- B: Brennkammer
- BS: Brennstoff
- E: Einheit, bestehend aus Wärmetauscher + Brennkammer
- G: Generator
- GB: gasförmiger Brennstoff
- HG: Heißgase
- K: Katalysator
- L: Luft
- LBG: Luft-Brennstoffgemisch
- T: Turbine
- V: Verdichter
- VG: Verbrennungsgase
- W: Wärmetauscher
- WW: Wärmetauscherwand
- ZK: zuleitender Kanal
- 1: Abgaskühlung
- 2: Kompressorluftvorwärmung
- 3: Zündung und Wärmefreisetzung
- 4: Abgas von Turbine
- 5: Wandtemperatur Rekuperator
- 6: Heissgas zur Turbine
- 7: katalytisch beschichteter Bereich

## Patentansprüche

1. Gasturbinenanlage mit einem
- Verdichter (V),
- einem dem Verdichter (V) nachgeschalteten Wärmetauscher (W) zur Erwärmung einer aus dem Verdichter (V) kommenden, verdichteten Luft (L),
- einer Brennkammer (B),
- sowie einer Turbine (T), die durch heisse Verbrennungsgase (VG) antreibbar ist,
- wobei der Wärmetauscher (W) und die Brennkammer (B) in einer gemeinsamen Einheit (E) integriert sind,
- wobei innerhalb der Einheit (E) ein Katalysator (K) vorgesehen ist,
- wobei der Luft (L) vor Eintritt in die Einheit (E) Brennstoff (BS) beisetzbar ist, der in Form eines Luft-Brennstoffgemisches (LBG) katalytisch entzündbar ist,
- wobei die Einheit (E) wenigstens einen Kanal (ZK) vorsieht, durch den das Luft-Brennstoffgemisch (LBG) der Turbine (T) zuführbar ist und
- wobei dieser Kanal (ZK) thermisch an wenigstens einen, die Verbrennungsgase (VG) ableitenden Abgasrückführkanal (AK) gekoppelt,
**dadurch gekennzeichnet, dass**
Mittel zur Erreichung eines Wärmeübergangs von dem entzündeten Luft-Brennstoffgemisch (LBG) innerhalb des zuleitenden Kanals zur Turbine (ZK) hin zu den, den zuleitenden Kanal (ZK) umströmenden Verbrennungsgasen aus der Turbine (VG) vorhanden sind.

2. Gasturbinenanlage nach Anspruch 1,
**dadurch gekennzeichnet, dass**
der das Luft-Brennstoffgemisch (LBG) zuleitende Kanal (ZK) wenigstens teilweise innenseitig mit einem Katalysatormaterial beschichtet ist.

3. Gasturbinenanlage nach Anspruch 1 oder 2,
**dadurch gekennzeichnet, dass**
der Brennstoff (BS) der Luft (L) vor dem Verdichter (V) beimischbar ist.

4. Gasturbinenanlage nach Anspruch 1 oder 2,
**dadurch gekennzeichnet, dass**
der Brennstoff (BS) der verdichteten Luft (L) nach dem Verdichter (V) und vor der Einheit (E) mittels einer Einspritzdüse beimischbar ist.

5. Gasturbinenanlage nach einem der Ansprüche 1 bis 4,
**dadurch gekennzeichnet, dass**
der das Luft-Brennstoffgemisch (LBG) der Turbine (T) zuleitenden Kanal (ZK) und der die Verbrennungsgase (VG) ableitende Abgasrückführkanal (AK) schichtförmig in Art eines Plattenwärmetauschers angeordnet sind.

6. Gasturbinenanlage nach Anspruch 5,
**dadurch gekennzeichnet, dass**
eine Vielzahl von sich wiederholenden Schichten bestehend aus zuleitendem Kanal (ZK) und Abgasrückführkanal (AK) vorgesehen ist.

7. Gasturbinenanlage nach einem der Ansprüche 1 bis 6,
**dadurch gekennzeichnet, dass**
der zuleitende Kanal (ZK) aus einer den Kanal einschliessenden Wärmetauscherwand (WW) mit einer innenseitig die Wärmetauscherwand (WW) umgebenden Katalysatorschicht besteht und der Abgasrückführkanal (AK) von den Wärmetauscherwänden (WW) zweier benachbarter zuleitenden Kanälen (ZK) eingeschlossen ist.

8. Gasturbinenanlage nach einem der Ansprüche 1 bis 7,
**dadurch gekennzeichnet, dass**
die Einheit (E) länglich ausgebildet ist, mit einer Einlassseite für das Luft-Brennstoffgemisch (LBG) und einer Turbinen (T) zugewandten Auslassseite, wobei der Katalysator (K) zumindest im Bereich der Turbinen (T) zugewandten Auslassseite in dem zuleitenden Kanal (ZK) vorgesehen ist.

9. Verfahren zum Betrieb einer Gasturbinenanlage nach einem der Ansprüche 1 bis 8,
- wobei Luft (L) in einem Verdichter (V) verdichtet wird,
- die Luft (L) mit einem Brennstoff (BS) zu einem Luft-Brennstoffgemisch (LBG) gemischt wird,
- das Luft-Brennstoffgemisch (LBG) in einen zuleitenden Kanal (ZK) in einer Brennkammer (B) geleitet und dort katalytisch entzündet wird, so dass Heissgase (HG) entstehen,
- wobei mit den Heissgase (HG) eine Turbine (T) angetrieben wird,
- wobei die heissen Verbrennungsgase (VG) aus der Turbine (T) das Luft-Brennstoffgemisch (LBG) vorwärmen,
**dadurch gekennzeichnet, dass**
nach Erreichen der Zündtemperatur ein Wärmeübergang von. dem entzündeten Luft-Brennstoffgemisch (LBG) hin zu den Verbrennungsgasen aus der Turbine (VG) stattfindet, wodurch der Katalysator (K) gekühlt und die Vorwärmleistung der Verbrennungsgase (VG) gesteigert wird.

10. Verfahren nach Anspruch 9
**dadurch gekennzeichnet, dass**
zum Erreichen der Zündtemperatur des Luft-Brennstoffgemisches (LBG) die Abwärme der Verbrennungsgase (VG) genutzt wird, die über Wärmekopplung den Katalysator (K) auf die Zündtemperatur erhitzt.

11. Verfahren nach Anspruch 9,
**dadurch gekennzeichnet, dass**
das Erreichen der Zündtemperatur des eingeleiteten Luft-Brennstoffgemisches (LBG) mit einem Hilfsbrenner durchgeführt wird.

12. Verfahren nach einem der Ansprüche 9 bis 11,
**dadurch gekennzeichnet, dass**
durch Wahl des Mischungsverhältnisses des Luft-Brennstoffgemisches (LBG) der räumliche Zündbereich innerhalb des zuleitenden Kanals (ZK) festgelegt wird.

13. Verfahren nach einem der Ansprüche 9 bis 12,
**dadurch gekennzeichnet, dass**
in der Brennkammer (B) ein mageres Luft-Brennstoffgemisch (LBG) gezündet wird.

## Claims

1. Gas-turbine plant having
- a compressor (V),
- a heat exchanger (W) connected downstream of the compressor (V) for heating compressed air (L) coming from the compressor (V),
- a combustion chamber (B),
- and a turbine (T) which can be driven by hot combustion gases (VG),
- the heat exchanger (W) and the combustion chamber (B) being integrated in a common unit (E),
- a catalyst (K) being provided inside the unit (E),
- it being possible for fuel (BS) to be added to the air (L) before entry into the unit (E), which fuel (BS) can be ignited catalytically in the form of an air/fuel mixture (LBG),
- the unit (E) providing at least one duct (ZK) through which the air/fuel mixture (LBG) can be fed to the turbine (T), and
- this duct (ZK) being thermally coupled to at least one exhaust-gas return duct (AK) carrying off the combustion gases (VG),
**characterized in that** there are means for achieving a heat transfer from the ignited air/fuel mixture (LBG) inside the feeding duct (ZK), leading to the turbine, to the combustion gases (VG) coming from the turbine and flowing around the feeding duct (ZK).

2. Gas-turbine plant according to Claim 1, **characterized in that** the duct (ZK) feeding the air/fuel mixture (LBG) is coated, at least partly, with a catalyst material on the inside.

3. Gas-turbine plant according to Claim 1 or 2, **characterized in that** the fuel (BS) can be admixed with the air (L) upstream of the compressor (V).

4. Gas-turbine plant according to Claim 1 or 2, **characterized in that** the fuel (BS) can be admixed with the compressed air (L) by means of an injection nozzle downstream of the compressor (V) and upstream of the unit (E).

5. Gas-turbine plant according to one of Claims 1 to 4, **characterized in that** the duct (ZK) feeding the air/fuel mixture (LBG) to the turbine (T) and the exhaust-gas return duct (AK) carrying off the combustion gases (VG) are arranged in layers like a plate-type heat exchanger.

6. Gas-turbine plant according to Claim 5, **characterized in that** a multiplicity of repetitive layers consisting of feeding duct (ZK) and exhaust-gas return duct (AK) are provided.

7. Gas-turbine plant according to one of Claims 1 to 6, **characterized in that** the feeding duct (ZK) consists of a heat-exchanger wall (WW) enclosing the duct and having a catalyst coating surrounding the heat-exchanger wall on the inside, and the exhaust-gas return duct (AK) is enclosed by heat-exchanger walls (WW) of two adjacent feeding ducts (ZK).

8. Gas-turbine plant according to one of Claims 1 to 7, **characterized in that** the unit (E) is of elongated design, having an inlet side for the air/fuel mixture (LBG) and an outlet side facing turbines (T), the catalyst (K) being provided in the feeding duct (ZK) at least in the region of the outlet side, which faces turbines (T).

9. Method of operating a gas-turbine plant according to one of Claims 1 to 8,
- air (L) being compressed in a compressor (V),
- the air (L) being admixed with a fuel (BS) to form an air/fuel mixture (LBG),
- the air/fuel mixture (LBG) being directed into a feeding duct (ZK) in a combustion chamber (B) and being ignited catalytically there, so that hot gases (HG) are produced,
- a turbine (T) being driven by the hot gases (HG),
- the hot combustion gases (VG) from the turbine (T) preheating the air/fuel mixture (LBG),
**characterized in that**, after the ignition temperature has been reached, a heat transfer takes place from the ignited air/fuel mixture (LBG) to the combustion gases (VG) from the turbine, as a result of which the catalyst (K) is cooled and the preheating output of the combustion gases (VG) is increased.

10. Method according to Claim 9, **characterized in that** the waste heat of the combustion gases (VG) is utilized in order to reach the ignition temperature of the air/fuel mixture (LBG), and this waste heat heats the catalyst (K) to the ignition temperature via thermal coupling.

11. Method according to Claim 9, **characterized in that** the ignition temperature of the air/fuel mixture (LBG) introduced is reached by means of an auxiliary burner.

12. Method according to one of Claims 9 to 11, **characterized in that** the spatial ignition region inside the feeding duct (ZK) is established by selection of the mixing ratio of the air/fuel mixture (LBG).

13. Method according to one of Claims 9 to 12, **characterized in that** a lean air/fuel mixture (LBG) is ignited in the combustion chamber (B).

## Revendications

1. Installation à turbine à gaz avec
- un compresseur (V),
- un échangeur de chaleur (W) raccordé en aval du compresseur (V) pour chauffer un air comprimé (L) provenant du compresseur (V),
- une chambre de combustion (B),
- et une turbine (T) qui peut être entraînée par des gaz de combustion chauds (VG),
- dans laquelle l'échangeur de chaleur (W) et la chambre de combustion (B) sont intégrés dans une unité commune (E),
- dans laquelle un catalyseur (K) est prévu dans l'unité (E),
- dans laquelle l'air (L), avant d'entrer dans l'unité (E), peut être mêlé de combustible (BS) qui est inflammable par catalyse sous forme d'un mélange air-combustible (LBG),
- dans laquelle l'unité (E) prévoit au moins un canal (ZK) par lequel le mélange air-combustible (LBG) peut être amené à la turbine (T) et
- dans laquelle ce canal (ZK) est couplé thermiquement à au moins un canal de recyclage des gaz d'échappement (AK) évacuant les gaz de combustion (VG),
**caractérisée en ce que**
sont présents des moyens pour obtenir un transfert de chaleur du mélange air-combustible (LBG) enflammé à l'intérieur du canal d'alimentation (ZK) en direction de la turbine, vers les gaz de combustion (VG) s'écoulant autour du canal d'alimentation (ZK) depuis la turbine.

2. Installation à turbine à gaz selon la revendication 1,
**caractérisée en ce que**
le canal d'alimentation (ZK) amenant le mélange air-combustible (LBG) est au moins partiellement revêtu intérieurement d'une matière de catalyseur.

3. Installation à turbine à gaz selon la revendication 1 ou 2,
**caractérisée en ce que**
le combustible (BS) peut être mélangé avec l'air (L) en amont du compresseur (V).

4. Installation à turbine à gaz selon la revendication 1 ou 2,
**caractérisée en ce que**
le combustible (BS) peut être mélangé avec l'air (L) en aval du compresseur (V) et en amont de l'unité (E) au moyen d'une buse d'injection.

5. Installation à turbine à gaz selon l'une quelconque des revendications 1 à 4,
**caractérisée en ce que**
le canal d'alimentation (ZK) amenant le mélange air-combustible (LBG) à la turbine (T) et le canal de recyclage des gaz d'échappement (AK) évacuant les gaz de combustion (VG) sont disposés sous forme de couches comme dans un échangeur de chaleur à plaques.

6. Installation à turbine à gaz selon la revendication 5,
**caractérisée en ce que**
une multitude de couches se répétant composées d'un canal d'alimentation (ZK) et d'un canal de recyclage des gaz d'échappement (AK) est prévue.

7. Installation à turbine à gaz selon l'une quelconque des revendications 1 à 6,
**caractérisée en ce que**
le canal d'alimentation (ZK) est composé d'une paroi d'échangeur de chaleur (WW) englobant le canal avec une couche de catalyseur entourant à l'intérieur la paroi d'échangeur de chaleur (WW) et le canal de recyclage des gaz d'échappement (AK) est entouré des parois d'échangeur de chaleur (WW) de deux canaux d'alimentation (ZK) voisins.

8. Installation à turbine à gaz selon l'une quelconque des revendications 1 à 7,
**caractérisée en ce que**
l'unité (E) est configurée longitudinalement, avec un côté admission pour le mélange air-combustible (LBG)et un côté évacuation orienté vers les turbines (T), le catalyseur (K) étant prévu au moins dans la zone du côté évacuation orienté vers les turbines (T), dans le canal d'alimentation (ZK).

9. Procédé d'exploitation d'un installation à turbine à gaz selon l'une quelconque des revendications 1 à 8,
- selon lequel de l'air (L) est comprimé dans un compresseur (V),
- l'air (L) est mélangé avec un combustible (BS) dans un mélange air-combustible (LBG),
- le mélange air-combustible (LBG) est conduit dans un canal d'alimentation (ZK) à une chambre de combustion (B) où il est enflammé par catalyse, produisant des gaz chauds (HG),
- selon lequel une turbine (T) est entraînée par les gaz chauds (HG),
- selon lequel les gaz de combustion chauds (VG) sortant de la turbine (T) préchauffent le mélange air-combustible (LBG),
**caractérisé en ce que**
après avoir atteint la température d'inflammation, un transfert de chaleur a lieu du mélange air-combustible (LBG) enflammé en direction de la turbine, vers les gaz de combustion (VG) provenant de la turbine, de sorte que le catalyseur (K) refroidit et la puissance de préchauffage des gaz de combustion (VG) augmente.

10. Procédé selon la revendication 9,
**caractérisé en ce que**
pour atteindre la température d'inflammation du mélange air-combustible (LBG) est utilisée la chaleur perdue des gaz de combustion (VG) qui porte par couplage thermique le catalyseur (K) à la température d'inflammation.

11. Procédé selon la revendication 9,
**caractérisé en ce que**
la température d'inflammation du mélange air-combustible (LBG) introduit est atteinte avec un brûleur auxiliaire.

12. Procédé selon l'une quelconque des revendications 9 à 11,
**caractérisé en ce que**
la zone spatiale d'inflammation à l'intérieur du canal d'alimentation (ZK) est déterminée par le choix du rapport de mélange du mélange air-combustible (LBG).

13. Procédé selon l'une quelconque des revendications 9 à 12,
**caractérisé en ce que**
un mélange air-combustible (LBG) pauvre est enflammé dans la chambre de combustion (B).
